# EUROPÄISCHE PATENTSCHRIFT

(11) **EP 1 183 087 B1**
(45) Veröffentlichungstag und Bekanntmachung des Hinweises auf die Patenterteilung: **19.10.2005**
(21) Anmeldenummer: 00908951.7
(22) Anmeldetag: 27.01.2000
(51) Int. Cl.: B01D 29/15, B01D 29/46, B01D 29/54, B01D 29/64, B01D 29/68, B01D 29/90, B01D 33/073, B01D 33/27, B01D 33/39, B01D 33/50

(54) **RÜCKSPÜLBARES FLÜSSIGKEITSFILTER**
BACK-WASHABLE FILTER FOR LIQUIDS
FILTRE LAVABLE A CONTRE-COURANT DESTINE A DES LIQUIDES

(30) Priorität: 16.04.1999 DE 19917259
(43) Veröffentlichungstag der Anmeldung: 06.03.2002
(73) Patentinhaber: MAHLE Filtersysteme GmbH, 70376 Stuttgart (DE)
(72) Erfinder: GEISBAUER, Heinz, D-74629 Pfedelbach (DE)
(74) Vertreter: Bernhard, Uwe
(86) Internationale Anmeldenummer: PCT/DE2000/000257
(87) Internationale Veröffentlichungsnummer: WO 2000/062892

(56) Entgegenhaltungen:
- DE-A- 4 125 358
- DE-A- 19 523 462
- DE-A- 19 803 083
- DE-U- 9 103 149

## Beschreibung

Die Erfindung betrifft ein rückspülbares Filter für Verunreinigungen enthaltende Flüssigkeiten und ein Verfahren zum Betrieb des Filters.

Aus der DE 91 03 149 U1 ist ein derartiges Filter mit den Merkmalen A bis F des Anspruchs 1 bekannt, bei dem in einem kreiszylindrischen Filtergehäuse ein kreiszylindrischer Filterkörper angeordnet ist, der im Filtergehäuse einen radial innenliegenden, rohseitigen Zuströmraum von einem radial außenliegenden, reinseitigen Abströmraum trennt. Im Abströmraum ist ein sich axial erstreckender Spülkanal angeordnet, der radial außen am Filterkörper anliegt. Der Spülkanal weist einen sich axial erstreckenden Spülspalt auf, der dem Filterkörper zugewandt ist. Außerdem kommuniziert der Spülkanal mit einer Reinigungsflüssigkeitsquelle. Die Reinigungsflüssigkeit ist im Spülkanal mit Druck beaufschlagbar, um ein effizientes Reinigen bzw. Rückspülen des Filterkörpers zu erzielen. Filterkörper und Spülkanal sind relativ zueinander in einer Bewegungsrichtung bewegbar. Auf diese Weise ist die gesamte Mantelfläche des Filterkörpers im Verlaufe einer vollständigen Umdrehung des Filterkörpers vollständig rückspülbar.

Aus der älteren, jedoch nachveröffentlichten DE 198 03 083 A1 ist ebenfalls ein solches Filter bekannt, das zusätzlich die Merkmale G bis J des Anspruchs 1 besitzt und bei dem der Filterkörper auf einer dem Spülkanal zugewandten Seite Stege aufweist, die in Bewegungsrichtung voneinander beabstandet sind. Je zwei benachbarte Stege bilden am Filterkörper jeweils ein separat rückspülbares Segment aus, wobei beim Spülen eines dieser Segmente die beiden zugehörigen Stege mit Dichtflächen bezüglich der Bewegungsrichtung vor und nach der Spülöffnung dichtend am Spülkanal anliegen und die Spülöffnung freigeben. Bezüglich der Bewegungsrichtung ist die Erstreckung jeder Dichtfläche größer als die Erstreckung der Spülöffnung.

Bei Filtern dieser Art erfolgt die Rückspülung des Filterkörpers durch eine Druckbeaufschlagung der Reinigungsflüssigkeit im Spülkanal, wodurch die Reinigungsflüssigkeit über den Spülspalt den Filterkörper durchdringt und auf der Zuströmseite ein Ablösen der Verschmutzungen bewirkt. Die Güte der Reinigungswirkung hängt bei derartigen Filtern wesentlich von dem die Rückspülung bewirkenden Flüssigkeitsvolumenstrom ab. Beim bekannten Filter wird die Reinigungsflüssigkeit im Spülkanal mit einem im wesentlichen konstant bleibenden Druck an den Filterkörper herangeführt, so dass der Reinigungsvorgang mit einem entsprechend konstanten Reinigungsflüssigkeitsvolumenstrom durchführbar ist. Damit dies kontinuierlich, entlang des gesamten Filterkörperumfanges durchführbar ist, muß die Förderleistung der Reinigungsmittelquelle, z.B. eine Pumpe, mindestens so groß sein, dass Reinigungsflüssigkeit unter Druck mit demselben Volumenstrom in den Spülkanal nachgeführt werden kann.

Aus der DE 195 23 462 A1 ist ein rückspülbares Filter einer anderen Art bekannt, das ein stehend angeordnetes, kreiszylindrisches Filtergehäuse aufweist, in dem ein kreiszylindrischer Filterkörper angeordnet ist und darin axial einen rohseitigen Zuströmraum von einem reinseitigen Abströmraum trennt. Bei diesem Filter ist ein Rückströmkanal im Zuströmraum angeordnet und liegt am Filterkörper an. Dieser Rückströmkanal weist einen Einströmspalt auf, der dem Filterkörper zugewandt ist. Der Rückströmkanal kommuniziert mit einem relativ drucklosen Ablauf, so dass auch hier eine Rückspülung durchführbar ist. Zur Verbesserung der Reinigungswirkung wird der Filterkörper in getrennt durchströmbare, d.h. separat rückspülbare Segmente unterteilt, deren Bogenlänge maximal so groß wie die Bogenlänge des an der Außenfläche des Filterkörpers anliegenden Rückströmkanals ist. Die Unterteilung des Filterkörpers in Segmente erfolgt dabei durch in Umfangsrichtung aufeinanderfolgende, voneinander beabstandete Stege. Beim Spülen eines Segmentes liegen die beiden zugehörigen Stege bezüglich der Bewegungsrichtung, d.h. in Umfangsrichtung, vor und nach dem Einströmspalt dichtend am Rückströmkanal an, so dass die gesamte Reinigungswirkung des Rückströmkanals auf das jeweils aktivierte Segment begrenzt ist.

Auch bei diesem Filtertyp bleibt der Druck der Reinigungsflüssigkeit, nämlich der reinseitige Druck im Abströmraum während des Rückspülvorganges im wesentlichen konstant, so dass auch hier ein gleichbleibender Reinigungsflüssigkeitsvolumenstrom gewährleistet werden kann. Um keinen Druckabfall zu erhalten, muß auch hier der Fördervolumenstrom der Reinigungsmittelquelle größer als oder zumindest gleich groß wie der Reinigungsflüssigkeitsvolumenstrom während der Rückspülung sein. Dies ist hier gegeben, da als Reinigungsmittel eine Teilmenge der gereinigten Flüssigkeit verwendet wird, die direkt aus dem Abströmraum wieder durch den Filterkörper und den Rückströmkanal abfließt. Die Pumpe, die zur Durchströmung des Filters dient, weist regelmäßig eine Förderleistung auf, die um ein Vielfaches größer ist als der Rückspülvolumenstrom, so dass es beim Rückspülen auch nicht zu einer Entleerung des Filtergehäuses kommen kann.

Die vorliegende Erfindung beschäftigt sich mit dem Problem, bei einem Filter der eingangs genannten Art die Rückspülwirkung zu verbessern.

Dieses Problem wird durch die Gegenstände der unabhängigen Ansprüche gelöst.

Die Erfindung beruht auf dem allgemeinen Gedanken, die einzelnen Segmente eines segmentierten Filterkörpers jeweils mit Hilfe eines stoßartig oder impulsartig wirkenden Spülvorganges zu reinigen, der mit Hilfe eines zwischen Reinigungsmediumquelle und Spülöffnung angeordneten Reinigungsmediumspeichers erzielt wird.

Die Ausbildung eines derartigen, aus einem relativ großen Volumenstrom von unter relativ hohem Druck stehenden Reinigungsmedium gebildeten Impulses oder Stoßes zur Rückspülung einzelner Segmente wird beim erfindungsgemäßen Filter mittels dem zwischengeschalteten Reinigungsmediumspeicher dadurch erzielt, dass die zum Separieren der Segmente dienenden Stege die Spülöffnung des Spülkanals zwischen zwei Spülvorgängen verschließen. Solange die Spülöffnung verschlossen ist, kann die Reinigungsmediumquelle mehr Reinigungsmittel in den Spülkanal und somit in den Reinigungsmediumspeicher einbringen, als aus diesem durch die Spülöffnung austritt, so dass die Möglichkeit besteht, im Reinigungsmediumspeicher und somit im Spülkanal einen Druckanstieg im Reinigungsmedium zu erzeugen. Dieser erhöhte Druck bewirkt dann beim Öffnen der Spülöffnung einen Spülimpuls mit erhöhtem Druck und vergrößertem Volumenstrom, wodurch sich die Reinigungswirkung deutlich verbessert.

Während den Phasen, in denen die Stege die Spülöffnung verschließen, kann der Reinigungsmediumspeicher gefüllt und im Spülkanal bzw. im vorgeschalteten Reinigungsmediumspeicher ein Druck im Reinigungsmedium aufgebaut werden. Insbesondere dann, wenn der Spülkanal relativ ungedrosselt mit einem Reinigungsmediumspeicher kommuniziert, kann beim Öffnen der Spülöffnung ein Reinigungsmediumvolumenstrom zum Spülen abgegeben werden, der deutlich größer ist als der Förderstrom der verwendeten Reinigungsmediumquelle. Denn z.B. bei mindestens gleich großer Verschlußdauer wie Öffnungsdauer der Spülöffnung kann beim Spülen ein Volumen abgegeben werden, das wenigstens doppelt so groß ist wie das zum Füllen des Speichers während dieser Zeit von der Quelle dem Spülkanal zugeführte Volumen, sofern der Reinigungsmediumspeicher von der Reinigungsmediumquelle permanent beschickt wird.

Erfindungsgemäß ist ein Reinigungsmediumspeicher im Spülkanal ausgebildet, der der Reinigungsmediumquelle nachgeschaltet und durch diese füllbar ist, wobei das Reinigungsmedium im Reinigungsmediumspeicher mit einem Druck beaufschlagbar ist. Für den Fall, dass der Filterkörper zylindrisch ausgebildet ist und von radial außen nach radial innen durchströmt wird, befindet sich demnach der Spülkanal mit integriertem Reinigungsmediumspeicher im Inneren des Filterkörpers, so dass sich an den Einbaumaßen des radial außenliegenden Filtergehäuses durch diese Maßnahmen nichts ändert. Diese Bauform eignet sich insbesondere für die. Verwendung eines gasförmigen Fluids als Reinigungsmedium, da dieses durch Kompression besonders einfach gespeichert werden kann.

Die erfindungsgemäßen Vorteile werden hierbei besonders klar, da während den. Phasen, in denen die Stege die Spülöffnung verschließen, der Reinigungsmediumspeicher gefüllt und im Spülkanal bzw. im vorgeschalteten Reinigungsmediumspeicher ein Druck im Reinigungsmedium aufgebaut werden kann. Beim Öffnen der Spülöffnung kann dann ein Reinigungsmediumvolumenstrom zum Spülen abgegeben werden, der deutlich größer ist als der Förderstrom der verwendeten Reinigungsmediumquelle. Denn z.B. bei mindestens gleich großer Verschlußdauer wie Öffnungsdauer der Spülöffnung kann beim Spülen ein Volumen abgegeben werden, das wenigstens doppelt so groß ist wie das zum Füllen des Speichers während dieser Zeit von der Quelle dem Spülkanal zugeführte Volumen, sofern der Reinigungsmediumspeicher von der Reinigungsmediumquelle permanent beschickt wird.

Dieser Zusammenhang wird bei einer Weiterbildung des Filters ausgenutzt, indem das Volumen des Reinigungsmediumspeichers, der Spüldruck und die Spülöffnung so dimensioniert sind, dass beim Spülen eines Segmentes der Reinigungsmediumvolumenstrom während des gesamten Spülvorganges stets größer ist als der Füllvolumenstrom der Reinigungsmediumquelle. Das erfindungsgemäße Filter unterscheidet sich durch die damit erzielbare Reinigungswirkung erheblich von herkömmlichen Filtern. Insbesondere kommt das erfindungsgemäße Filter ohne einen mechanischen, im Zuströmraum am Filterkörper angreifenden Abschaber oder Abstreifer aus, den herkömmliche Filter zur Vorreinigung benötigen, damit der Spülvorgang die gewünschte Reinigungswirkung erzielen kann.

Ebenso kann auch ein flüssiges Fluid als Reinigungsmedium verwendet werden, wobei dann ein entsprechend ausgebildeter Reinigungsmediumspeicher vorgesehen wird, der beispielsweise ein Gaskissen oder einen federbelasteten, beweglichen Kolben zur Erzeugung einer statischen Vorspannung im Reinigungsmedium enthält.

Bei einer speziellen Ausführungsform verschließen die Stege die Spülöffnung wenigstens genau solange wie sie zum Spülen eines Segmentes geöffnet ist, wodurch ein besonders hoher Druckausstieg und/oder Volumenstrom erzielbar ist.

Um die Schließzeiten der Spülöffnung größer als die Öffnungszeiten bzw. Spülzeiten auszugestalten, besteht die Möglichkeit, in Bewegungsrichtung die Erstreckung der Dichtfläche jedes Steges größer als den Abstand zwischen den Dichtflächen benachbarter Stege auszubilden. Es hat sich als besonders vorteilhaft erwiesen, die Erstreckung der Dichtfläche etwa fünfmal größer als den Abstand zwischen benachbarten Dichtflächen auszubilden.

Ebenso ist es möglich, einen Antrieb zur Realisierung der Relativbewegung zwischen Filterkörper und Spülkanal so auszubilden, dass die Relativbewegung langsamer abläuft, wenn die Dichtfläche eines Steges die Spülöffnung verschließt, und schneller abläuft, wenn sich die Spülöffnung zwischen den Dichtflächen benachbarter Stege befindet. Auch ist es möglich, zum Antrieb einen Schrittmotor zu verwenden, der beispielsweise so betätigt wird, dass er in einer Schließstellung der Spülöffnung länger verharrt als in einer Öffnungsstellung.

Weitere wichtige Merkmale und Vorteile des erfindungsgemäßen Filters ergeben sich aus den Unteransprüchen, aus den Zeichnungen und aus der zugehörigen Figurenbeschreibung anhand der Zeichnungen.

Es versteht sich, daß die vorstehend und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch ein rückspülbares Filter nach der Erfindung,
- Fig. 2: einen Querschnitt durch einen einen Teil eines Spülkanals und einen Teil eines Filterkörpers enthaltenden Bereich des Filters in einer ersten Ausführungsform bei geöffneter Spülöffnung,
- Fig. 3: einen Querschnitt wie in Fig. 2, jedoch bei verschlossener Spülöffnung,
- Fig. 4: einen Querschnitt wie in Fig. 2, jedoch einer anderen Ausführungsform, und
- Fig. 5: einen Querschnitt wie in Fig. 3, jedoch einer weiteren Ausführungsform.

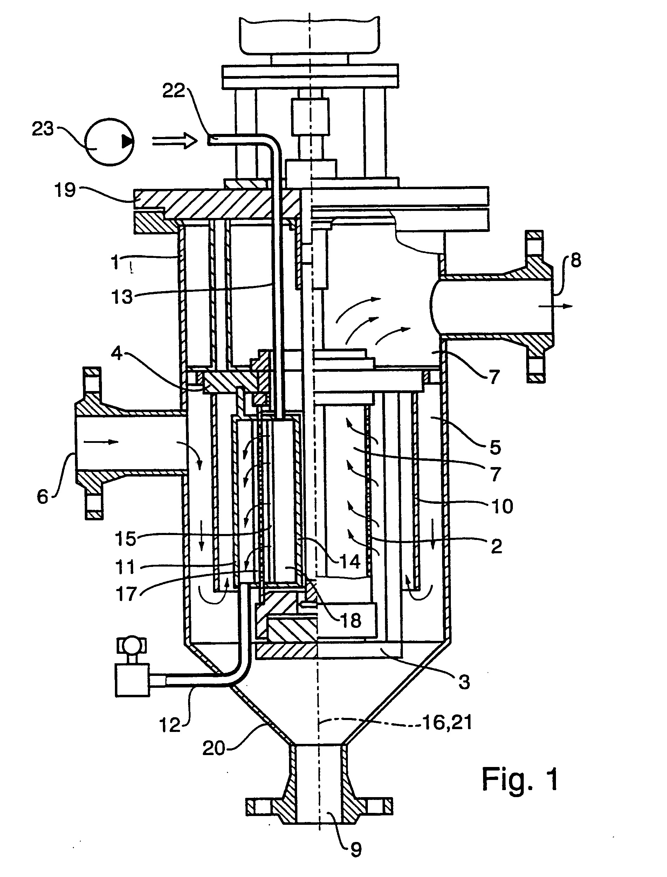

Entsprechend Fig. 1 ist in einem stehenden kreiszylindrischen Filtergehäuse 1 ein kreiszylindrischer Filterkörper 2, der hier als Kantenspaltfilterkörper ausgebildet ist, koaxial angeordnet. Der Filterkörper 2 ist axial mit einer unteren Abdeckung 3 und einer oberen Abdeckung 4 versehen, wodurch ein radial außenliegender, ringförmiger Zuströmraum 5 mit einem im Filtergehäuse 1 angeordneten Zuströmeinlaß 6 von einem radial innenliegenden Abströmraum 7 im Innenraum des Filterkörpers 2 getrennt ist. Der Abströmraum 7 umfaßt außer dem Innenraum des Filterkörpers 2 auch einen oben liegenden Abschnitt oberhalb der oberen Abdeckung 4, der einen Abströmauslaß 8 aufweist und über Durchbrüche in der oberen Abdeckung 4 mit dem Innenraum des Filterkörpers 2 kommuniziert. Im Zuströmraum 5 ist ein Tauchrohr 10 koaxial zum Filterkörper 2 angeordnet.

Die zu reinigende Flüssigkeit strömt über den Zuströmeinlaß 6 tangential in das Filtergehäuse 1 und mündet in den Zuströmraum 5, wodurch sich eine Zyklonwirkung ergibt, durch die grobe Verunreinigungen in der Flüssigkeit abgeschieden werden und in einem unteren, konisch sich verjüngenden Abschnitt oder Boden 20 des Filtergehäuses 1 abgelagert werden, in dem ein Auslaß 9 zum Austrag der Verunreinigungen vorgesehen ist. Die Flüssigkeit umströmt daraufhin die untere axiale Stirnseite des Tauchrohrs 10 und wird in den darin innenliegenden Bereich des Zuströmraums 5 gelenkt, der radial durch das Tauchrohr 10 und den Außenmantel des Filterkörpers 2 begrenzt ist. Der Filterkörper 2 wird radial von außen nach innen von der Flüssigkeit durchströmt, wodurch die Flüssigkeit von Verunreinigungen gereinigt wird; im weiteren Verlauf wird die gereinigte Flüssigkeit aus dem Abströmraum 7 durch den Abströmauslaß 8 aus dem Filter abgeleitet.

Zur Abreinigung der auf dem Außenmantel des Filterkörpers 2 abgesetzten Schmutzpartikel ist im Innenraum des Filterkörpers 2 ein Spülkanal 14 angeordnet, der unmittelbar an den Innenmantel des Filterkörpers 2 grenzt und sich axial etwa über die Höhe des Filterkörpers 2 erstreckt. Auf der den Innenmantel des Filterkörpers 2 zugewandten Seite weist der Spülkanal 14 eine als sich axial erstreckender Spalt ausgebildete Spülöffnung 15 auf, die über die Länge des Spülkanals 14 ausgebildet ist. Anstelle eines einzigen Spülspaltes können auch mehrere, axial beabstandete Spülöffnungen vorgesehen sein. Der Spülkanal 14 ist mit einer Druckleitung 13 verbunden, die durch einen Deckel 19 des Filtergehäuses 1 geführt ist und über einen Druckanschluß 22 mit einem unter Druck stehenden Reinigungsmedium, insbesondere Druckluft oder gereinigte Flüssigkeit, beaufschlagt wird.

Das unter Druck stehende Reinigungsmedium strömt vom Spülkanal 14 über die Reinigungsöffnung 15 radial von innen nach außen durch die Wandung des Filterkörpers 2, wodurch die auf dem Außenmantel des Filterkörpers 2 abgesetzten Ablagerungen gelöst werden.

Der rotationssymmetrische Filterkörper 2 ist drehbar um seine Längsachse 16, die identisch ist mit der Hochachse 21 des Filtergehäuses 1, gelagert; der Spülkanal 14 ist dagegen stationär im Innenraum des Filterkörpers 2 gehalten. Bei einer Umdrehung des Filterkörpers 2 kommen alle Abschnitte des Innenmantels in Kontakt mit der Spülöffnung 15 des Spülkanals 14, so daß der Außenmantel des Filterkörpers 2 über seinem gesamten Umfang gereinigt wird.

Der Filterkörper 2 kann für eine permanent ablaufende Reinigung kontinuierlich oder für eine bedarfsabhängig durchführbare Reinigung intermittierend gedreht werden; auch die Beaufschlagung mit unter Druck stehendem Reinigungsmedium kann kontinuierlich oder intermittierend erfolgen. Ebenso ist es möglich, den Filtriervorgang während der Abreinigung bzw. dem Rückspülvorgang aufrechtzuerhalten.

Ein Teil der beim Rückspülen abgelösten Verunreinigungen sinkt nach unten in den konischen Abschnitt 20 des Filtergehäuses ab und kann über den Auslaß 9 abgetragen werden. Um darüber hinaus auch Schmutzpartikel unmittelbar nach dem Ablösen aus dem Zuströmraum 5 abzuführen, ist bei der hier dargestellten speziellen Ausführungsform ein Rückströmkanal 11 vorgesehen, der parallel zum Spülkanal 14 im Zuströmraum 5 unmittelbar am Außenmantel des Filterkörpers 2 stationär angeordnet ist. Der Rückströmkanal 11 weist einen dem Außenmantel des Filterkörpers 2 zugewandten Einströmspalt 17 auf, der sich über die Länge des Rückströmkanals 11 erstreckt und radial in einer Flucht mit der Spülöffnung 15 des Spülkanals 14 liegt. Die von dem Reinigungsmedium vom Außenmantel des Filterkörpers 2 unter Druck gelösten Partikel werden über den Einströmspalt 17 in den Rückströmkanal 11 geleitet. Der untere Abschnitt des Rückströmkanals 11 mündet in ein seitlich aus dem Gehäuse 1 führendes Ablaufrohr 12, über das im Rückströmkanal 11 gesammelte Verunreinigungen abgeleitet werden können.

Sowohl der Spülkanal 14 als auch der Rückströmkanal 11 weisen hier einen annäherungsweise rechteckförmigen Außenquerschnitt auf, wobei die dem Filterkörper 2 zugewandte Seite jedes Kanals 11,14 entsprechend dem Radius des Filterkörpers 2 gekrümmt ist, um einen dichten Abschluß zwischen dem Kanal und dem Filterkörper zu erhalten und Fehlströme zwischen dem Innenraum des Spülkanals 14 und dem Abströmraum 7 zu verhindern.

Bei anderen, nicht dargestellten Ausführungsformen können im Filtergehäuse 1 mehrere Filterkörper 2, in radial gleichem Abstand um die Hochachse 21 des Filtergehäuses 1 gruppiert werden, wodurch die Durchsatzleistung erheblich gesteigert ist. In jedem dieser Filterkörper 2 ist dann ein Spülkanal 14 angeordnet, der jeweils über eine Druckleitung 13 und einen Druckanschluß 22 mit Reinigungsmedium versorgt wird. Ebenso ist eine Ausführungsform möglich, bei der der Filterkörper 2 ortsfest angeordnet ist, während der Spülkanal 14 um eine Drehachse rotiert und am Innenmantel des Filterkörpers 2 entlanggeführt ist.

Der Spülkanal 14 ist in seinem Inneren als Reinigungsmediumspeicher 18 ausgebildet, der über die Druckleitung 13 an eine Reinigungsmediumquelle, die hier als Pumpe 23 symbolisch dargestellt ist, angeschlossen ist. Wenn als Reinigungsmedium beispielsweise Druckluft verwendet wird, kann die Pumpe 23 die Druckluft in den Reinigungsmediumspeicher 18 einbringen und, sofern weniger Druckluft durch die Reinigungsöffnung 15 abströmt als durch die Pumpe 23 zugefördert wird, im Speicher 18 eine Komprimierung der Luft und somit einen Druckanstieg im Reinigungsmedium bewirken.

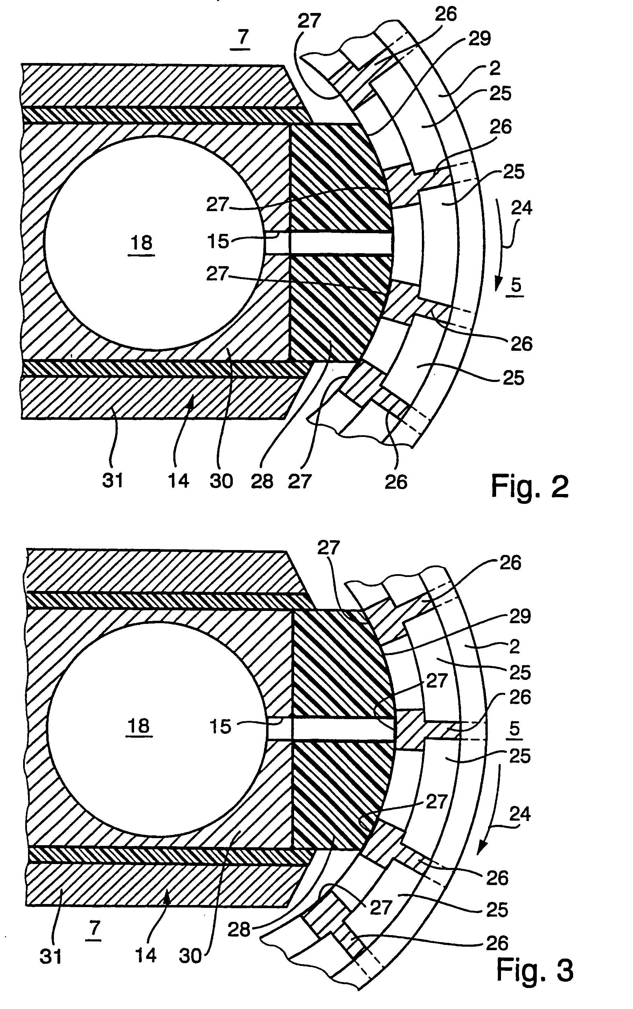

Wie aus den Fig. 2 bis 5 hervorgeht, ist der Filterkörper 2 in Umfangsrichtung, d.h. in der mit einem Pfeil 24 gekennzeichneten Bewegungsrichtung der zwischen Filterkörper 2 und Spülkanal 14 stattfindenden Relativbewegung, in aufeinanderfolgende, separat rückspülbare Segmente 25 unterteilt. Jedes dieser Segmente 25 wird durch zwei, sich hier radial erstreckende Stege 26 in der Bewegungsrichtung 24 begrenzt, so daß je zwei benachbarte Stege 26 ein Segment 25 am Filterkörper 2 ausbilden. Der Innenmantel oder die Innenfläche des Filterkörpers 2 wird hierbei durch die radial nach innen ragenden freien Enden der Stege 26 gebildet, die an ihrer dem Abströmraum 7 zugewandten Seite jeweils mit einer Dichtfläche 27 ausgestattet sind.

Der Spülkanal 14 weist an seiner dem Filterkörper 2 zugewandten Seite einen Dichtkörper 28 auf, mit dem der Spülkanal 14 am Filterkörper 2 und somit an den Dichtflächen 27 der Stege 26 anliegt. Da der Filterkörper 2 gekrümmt, insbesondere kreiszylindrisch ausgebildet ist, sind die Dichtflächen 27 sowie eine mit diesen zusammenwirkende Außenfläche 29 des Dichtkörpers 28 in derselben Weise gekrümmt ausgebildet, wodurch die Dichtflächen 27 flächig an der Außenfläche 27 zur Anlage kommen und eine effektive Abdichtung bewirken können. Um die Dichtwirkung zu verbessern, ist ein Innenteil 30 des Spülkanals 14, das den Dichtkörper 28 trägt und den Reinigungsmediumspeicher 18 sowie die Spülöffnung 15 enthält, in einem Außenteil 31 des Spülkanals 14 radial verstellbar gelagert und mit entsprechenden, nicht gezeigten Federmitteln gegen den Filterkörper 2 vorgespannt.

Entsprechend den Fig. 2 und 3 sind bei einer ersten Ausführungsform die Dichtflächen 27 der Stege 26 so dimensioniert, daß sie sich in Bewegungsrichtung 24 soweit erstrecken, daß sie die Spülöffnung 15 vollständig bedecken und somit dicht verschließen können. Diese Verschlußstellung ist in Fig. 3 wiedergegeben. In Fig. 2 befindet sich die Spülöffnung 15 bezüglich der Bewegungsrichtung 24 zwischen zwei benachbarten Stegen 26, wobei der Austritt von Reinigungsmedium aus der Reinigungsöffnung 15 seitlich durch die Dichtwirkung der Dichtflächen 27 auf das zwischen den der Spülöffnung 15 benachbarten Stegen 26 ausgebildete Segment 25 begrenzt ist. Demnach wird in der in Fig. 2 gezeigten Stellung nur das mit der Spülöffnung 15 kommunizierende Segment 25 rückgespült.

Bei der in Fig. 2 und 3 dargestellten Ausführungsform arbeitet das Filter wie folgt:

Das Filter weist einen Schrittmotor auf, der bei jedem Schritt den Filterkörper 2 um ein Segment 25 verstellt. Dabei weist der Filterkörper 2 nach jedem Schritt die in Fig. 3 dargestellte Relativlage zum Spülkanal 14 auf, d.h. ein Steg 26 verschließt mit seiner Dichtfläche 27 die Spülöffnung 15. Zwischen zwei aufeinanderfolgenden Verstellbewegungen des Filterkörpers 2 kann durch die kommunizierende Verbindung des Reinigungsmediumspeichers 18 mit der Reinigungsmediumquelle 23 (vgl. Fig. 1) Reinigungsmedium in den Reinigungsmediumspeicher 18 nachgefördert werden, wobei im Reinigungsmediumspeicher 18 ein relativ hoher Spüldruck aufgebaut werden kann. Während jeder Schrittverstellung des Filterkörpers 2 um ein Segment 25 kommt es dazu, daß die Spülöffnung 15 vollständig geöffnet wird und eine Rückspülung des jeweiligen Segmentes 25 erfolgt. Dabei kann das Reinigungsmedium mit dem hohen Druck des Reinigungsmediumspeichers 18 austreten und so eine impulsartige Beaufschlagung des jeweiligen Segmentes 25 mit Reinigungsmedium bewirken. Ein derartiger stoßartig ablaufender Reinigungsvorgang weist eine hohe Effektivität auf. Die Öffnungszeit oder Spülzeit, d.h. die Zeit, während der die Spülöffnung 15 - wie z.B. in Fig. 2 - geöffnet ist, kann bei dieser speziellen Ausführungsform etwa gleich groß wie, jedoch vorzugsweise deutlich kleiner als die Schließzeit sein, d.h. diejenige Zeit, während der die Spülöffnung 15 - wie z.B. in Fig. 3 - durch die Dichtfläche 27 eines der Stege 26 dicht verschlossen ist.

Wenn die Spülzeit gleich groß wie oder größer als die Öffnungzeit gewählt ist, kann bei geeigneter Auswahl der Reinigungsmediumquelle 23 der Volumenstrom, der während eines Spülvorganges aus der Spülöffnung 15 zur Reinigung des jeweiligen Segmentes 25 austritt, erheblich größer sein, als der Volumenstrom, der durch die Reinigungsmediumquelle 23 in den Reinigungsmediumspeicher 18 nachgefördert werden kann. Dementsprechend wird die Reinigungswirkung beim erfindungsgemäßen Filter gegenüber Filtern gesteigert, bei denen der Spülvolumenstrom beim Rückspülen im wesentlichem dem Füllvolumenstrom der Reinigungsmediumquelle entspricht.

Bei einer anderen Ausführungsform kann der Antrieb des Filterkörpers 2 auch so getaktet sein, daß er auch in der Fig. 2 dargestellten Relativlage zwischen Filterkörper 2 und Spülkammer 14 eine Stillstandszeit aufweist, die vorzugsweise erheblich kürzer gewählt ist, als die Stillstandszeit der in Fig. 3 dargestellten Relativlage. Bei einer weiteren Variante kann auch eine Drehverstellung ohne Schrittbewegung erfolgen, wobei jedoch die Bewegungsgeschwindigkeit bei geöffneter Spülöffnung 15 deutlich größer sein kann als bei verschlossener Spülöffnung 15.

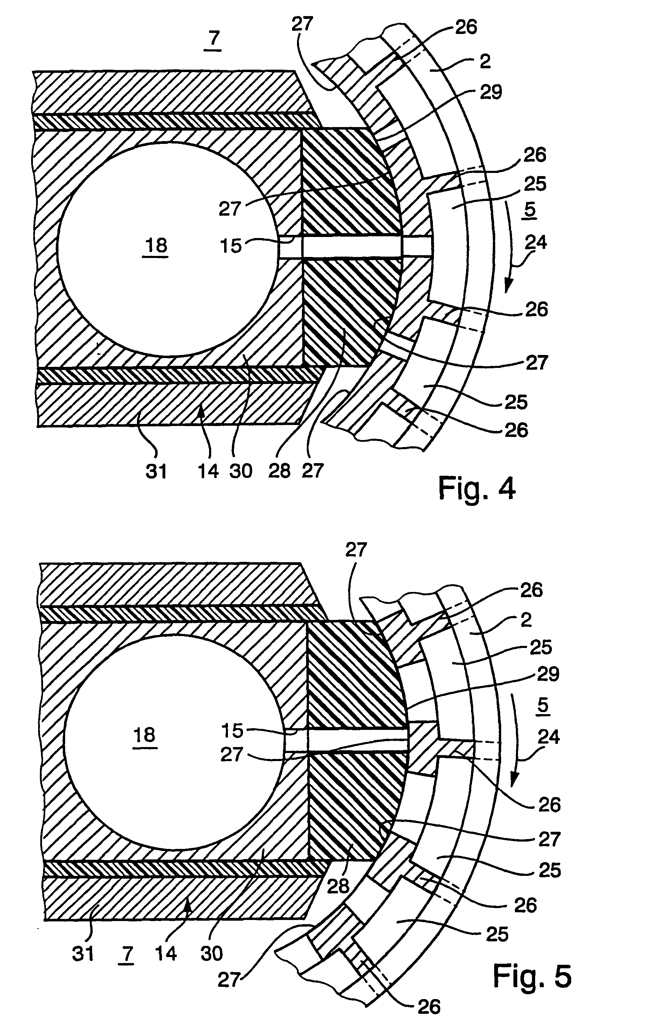

Entsprechend Fig. 4 kann bei einer anderen Ausführungsform die Schließzeit der Spülöffnung 15 dadurch länger ausgebildet werden als ihre Öffnungszeit, daß die Erstreckung der Dichtflächen 27 in Bewegungsrichtung 24 größer ist als der Abstand zwischen den Dichtflächen 27 benachbarter Stege 26 in Bewegungsrichtung 24. Wenn der Filterkörper 2 hier eine kontinuierliche, gleichbleibend schnelle Drehung durchführt, kommt es automatisch zu Verschlußzeiten, die länger sind als die Öffnungszeiten. Während der länger anhaltenden Verschlußzeiten kann dann wiederum im Reinigungsmediumspeicher 18 der Spüldruck aufgebaut werden und der erforderliche Vorrat an Reinigungsmedium gefüllt werden.

Entsprechend Fig. 5 können bei einer anderen Ausführungsform bezüglich der Bewegungsrichtung 24 die Abstände zwischen benachbarten Dichtflächen 27 etwa gleich groß sein wie die Erstreckungsrichtung der Dichtflächen 27. Bei dieser Ausführungsform ist die Verschlußzeit, während der die Spülöffnung 15 vollständig geschlossen ist, etwa gleich groß wie die Öffnungszeit oder Spülzeit, während der die Spülöffnung 15 vollständig geöffnet ist, sofern sich der Filterkörper 2 mit konstanter Drehgeschwindigkeit bewegt. Dennoch kann auch hier der Reinigungsmedium- oder Spülvolumenstrom deutlich größer sein als der durch die Reinigungsmediumquelle 23 in den Reinigungsmediumspeicher 18 geleitete Füllvolumenstrom, da die Befüllung des Reinigungsmediumspeichers 18 permanent, d.h. sowohl während der Schließzeit als auch während der Öffnungszeit ununterbrochen durchgeführt werden kann. Im vorliegenden Fall kann somit ein Spülvolumenstrom erzielt werden, der etwa doppelt so groß ist wie der Füllvolumenstrom.

## Patentansprüche

1. Rückspülbares Filter für Verunreinigungen enthaltende Flüssigkeiten mit folgenden Merkmalen:
A: wenigstens ein Filterkörper (2) ist in einem Filtergehäuse (1) angeordnet und trennt darin einen rohseitigen Zuströmraum (5) von einem reinseitigen Abströmraum (7),
B: wenigstens ein Spülkanal (14) ist im Abströmraum (7) angeordnet und liegt am Filterkörper (2) an,
C: der Spülkanal (14) weist wenigstens eine Spülöffnung (15) auf, die dem Filterkörper (2) zugewandt ist,
D: der Spülkanal (14) kommuniziert mit einer Reinigungsmediumquelle (23),
E: im Spülkanal (14) ist ein Reinigungsmedium mit einem Druck beaufschlagbar,
F: der Filterkörper (2) und der Spülkanal (14) sind relativ zueinander in einer Bewegungsrichtung (24) bewegbar,
**gekennzeichnet durch** folgende Merkmale:
G: der Filterkörper (2) weist auf einer dem Spülkanal (14) zugewandten Seite Stege (26) auf, die in Bewegungsrichtung (24) voneinander beabstandet sind,
H: je zwei benachbarte Stege (26) bilden am Filterkörper (2) jeweils ein separat rückspülbares Segment (25) aus,
I: die Stege (26) besitzen Dichtflächen (27), die an einem Dichtkörper (28) des Spülkanals (14) anliegen, wobei beim Spülen eines der Segmente (25) die beiden zugehörigen Stege (26) mit ihren Dichtflächen (27) bezüglich der Bewegungsrichtung (24) vor und nach der Spülöffnung (15) dichtend am Dichtkörper (28) anliegen und die Spülöffnung (15) freigeben,
J: bezüglich der Bewegungsrichtung (24) ist die Erstreckung jeder Dichtfläche (27) größer als die Erstreckung der Spülöffnung (15), damit jeder Steg (26) mit seiner Dichtfläche (27) die Spülöffnung (15) dicht verschließen kann,
K: der Spülkanal (14) ist in seinem Inneren als Reinigungsmediumspeicher (18) ausgebildet, der der Reinigungsmediumquelle (23) nachgeschaltet und **durch** diese füllbar ist, wobei das Reinigungsmedium im Reinigungsmediumspeicher (18) mit einem Druck beaufschlagbar ist.

2. Filter nach Anspruch 1,
**dadurch gekennzeichnet,**
**dass** in Bewegungsrichtung die Erstreckung der Dichtfläche (27) jedes Steges (26) gleich groß wie oder größer als der Abstand zwischen den Dichtflächen (27) benachbarter Stege (26) ist.

3. Filter nach Anspruch 2,
**dadurch gekennzeichnet,**
**dass** in Bewegungsrichtung (24) die Erstreckung der Dichtfläche (27) jedes Steges (26) etwa vier- bis siebenmal, insbesondere fünfmal, größer ist, als der Abstand zwischen den Dichtflächen (27) benachbarter Stege (26).

4. Verfahren zum Betrieb eines Filters nach einem der Ansprüche 1 bis 3,
**dadurch gekennzeichnet,**
**dass** die Reinigungsmediumquelle (23) bei durch die Dichtfläche (27) eines der Stege (26) verschlossener Spülöffnung (15) im Spülkanal (14) einen Druckanstieg im Reinigungsmedium erzeugt, derart, dass sich beim Öffnen der Spülöffnung (15) ein stoßartig oder impulsartig wirkender Spülvorgang ausbildet.

5. Verfahren nach Anspruch 4,
**dadurch gekennzeichnet,**
**dass** eine Schließzeit, während der die Spülöffnung (15) durch die Dichtfläche (27) eines der Stege (26) verschlossen ist, gleich groß wie oder größer als eine Spülzeit ist, während der das Spülen eines der Segmente (25) stattfindet.

6. Verfahren nach Anspruch 4 oder 5,
**dadurch gekennzeichnet,**
**dass** das Reinigungsmedium ein gasförmiges Fluid, insbesondere Preßluft, ist, wobei der Druck durch Kompression des gasförmigen Fluids beim Füllen des Reinigungsmediumspeichers (18) erzeugt wird.

7. Verfahren nach Anspruch 4 oder 5,
**dadurch gekennzeichnet,**
**dass** das Reinigungsmedium ein flüssiges Fluid, insbesondere eine Teilmenge der im Filter gereinigten Flüssigkeit, ist, wobei der Druck durch elastisches Verdrängen eines Federmittels, z.B. Gaskissen, beim Füllen des Reinigungsmediumspeichers (18) erzeugt wird.

8. Verfahren nach einem der Ansprüche 4 bis 7,
**dadurch gekennzeichnet,**
- **dass** die Spülzeit gleich groß wie oder größer als die Öffnungszeit gewählt wird,
- **dass** der Volumenstrom, der während eines Spülvorqangs aus der Spülöffnung (15) zur Reinigung des jeweiligen Segments (25) austritt, durch geeignete Auswahl der Reinigungsmediumquelle (23) größer ist als der Volumenstrom, der durch die Reinigungsmediumquelle (23) in den Reinigungsmediumspeicher (18) nachgefördert wird.

9. Verfahren nach einem der Ansprüche 4 bis 8,
**dadurch gekennzeichnet,**
**dass** der Reinigungsmediumvolumenstrom beim Spülen eines der Segmente (25) etwa drei- bis siebenmal, insbesondere fünfmal, größer ist als der Füllvolumenstrom der Reinigungsmediumquelle.

## Claims

1. A back-washable filter for liquids containing contaminants having the following features:
A: at least one filter body (2) is located in a filter housing (1), where it separates an incoming flow chamber (5) on the unfiltered side from a outgoing flow chamber (7) on the filtered side,
B: at least one washing channel (14) is located in the outgoing flow chamber (7) and presses against the filter body (2),
C: the washing channel (14) has at least one washing opening (15) which faces toward the filter body (2),
D: the washing channel (14) communicates with a cleaning medium source (23),
E: a cleaning medium can be pressurized in the washing channel (14),
F: the filter body (2) and the washing channel (14) can be moved relative to one another in a movement direction (24),
**characterized by** the following features:
G: the filter body (2) has links (26), on a side facing the washing channel (14), which are positioned at intervals from one another in the movement direction (24),
H: each two neighbouring links (26) form a separate back-washable segment (25) on the filter body (2),
I: the links (26) have sealing surfaces (27), which press against a sealing body (28) of the washing channel (14), with, during washing of one of the segments (25), the two associated links (26) pressing tightly against the sealing body (28) before and after the washing opening (15) relative to the movement direction (24) and exposing the washing opening (15),
J: the extension of each sealing surface (27) is greater than the extension of the washing opening (15) relative to the movement direction (24), so that each link (26) can tightly close the washing opening (15) using its sealing surface (27),
K: the washing channel (14) is implemented inside as a cleaning medium store (18), which is connected downstream from the cleaning medium source (23) and may be filled thereby, the cleaning medium being able to be pressurized in the cleaning medium store (18).

2. The filter according to claim 1,
**characterized in that** the extension of the sealing surface (27) of each link (26) in the movement direction is equal to or greater than the interval between the sealing surfaces (27) of neighbouring links (26).

3. The filter according to claim 2,
**characterized in that** the extension of the sealing surface (27) of each link (26) in the movement direction (24) is approximately four to seven times, particularly five times larger than the interval between the sealing surfaces (27) of neighbouring links (26).

4. A method for operating a filter according to one of claims 1 through 3,
**characterized in that** the cleaning medium source (23), when the washing opening (15) in the washing channel (14) is closed by the sealing surface (27) of one of the links (26), generates a pressure increase in the cleaning medium in such a way that upon opening of the washing opening (15) a blast-like or pulse-like washing procedure is implemented.

5. The method according to claim 4,
**characterized in that** a closing time, during which the washing opening (15) is closed by the sealing surface (27) of one of the links (26), is equal to or greater than a washing time, during which the washing of one of the segments (25) occurs.

6. The method according to claim 4 or 5,
**characterized in that** the cleaning medium is a gaseous fluid, particularly compressed air, the pressure being generated by compressing the gaseous fluid while filling the cleaning medium store (18).

7. The method according to claim 4 or 5,
**characterized in that** the cleaning medium is a liquid fluid, particularly a portion of the liquid filtered in the filter, the pressure being generated by elastic compression of a spring element, e.g., a gas cushion, while the cleaning medium store (18) is filled.

8. The method according to one of claims 4 through 7,
**characterized in that**
- the washing time selected is equal to or greater than the open time,
- the volume flow, which exits from the washing opening (15) to clean the particular segment (25) during a washing procedure, is greater, through suitable selection of the cleaning medium source (23), than the volume flow which is delivered by the cleaning medium source (23) into the cleaning medium store (18).

9. The method according to one of claims 4 through 8,
**characterized in that** the cleaning medium volume flow during washing of one of the segments (25) is approximately four to seven times, particularly five times, larger than the filling volume flow of the cleaning medium source.

## Revendications

1. Filtre lavable à contre-courant pour des liquides contenant des impuretés avec les caractéristiques suivantes :
A : au moins un corps de filtre (2) est disposé dans un boîtier filtrant (1) et y sépare un espace d'arrivée (5) côté brut d'un espace de sortie (7) côté épuré,
B : au moins un conduit de lavage (14) est disposé dans l'espace de sortie (7) et s'applique sur le corps de filtre (2),
C : le conduit de lavage (14) présente au moins une ouverture de lavage (15) qui est tournée vers le corps de filtre (2),
D : le conduit de lavage (14) communique avec une source d'agent de nettoyage (23),
E : un agent de nettoyage peut être sollicité en pression dans le conduit de lavage (14),
F : le corps de filtre (2) et le conduit de lavage (14) sont mobiles l'un par rapport à l'autre dans une direction de déplacement (24),
**caractérisé par** les caractéristiques suivantes :
G : le corps de filtre (2) présente sur un côté tourné vers le conduit de lavage (14) des traverses (26) distantes les unes des autres dans la direction de déplacement (24),
H : deux traverses voisines (26) forment à chaque fois sur le corps de filtre (2) un segment (25) lavable à contre-courant séparément,
I : les traverses (26) présentent des surfaces d'étanchéité (27) qui s'appliquent sur un corps d'étanchéité (28) du conduit de lavage (14), les deux traverses correspondantes (26), lors du lavage de l'un des segments (25), s'appliquant hermétiquement sur le corps d'étanchéité (28) par leurs surfaces d'étanchéité (27) avant et après l'ouverture de lavage (15) par rapport à la direction de déplacement (24) et dégageant l'ouverture de lavage (15),
J : par rapport à la direction de déplacement (24), l'extension de chaque surface d'étanchéité (27) est supérieure à l'extension de l'ouverture de lavage (15), afin que chaque traverse (26) puisse fermer hermétiquement l'ouverture de lavage (15) par sa surface d'étanchéité (27),
K : le conduit de lavage (14) est configuré intérieurement sous forme de réservoir d'agent de nettoyage (18), qui est monté en aval de la source d'agent de nettoyage (23) et peut être rempli par cette dernière, l'agent de nettoyage pouvant être sollicité en pression dans le réservoir d'agent de nettoyage (18).

2. Filtre suivant la revendication 1, **caractérisé en ce que**, dans la direction de déplacement, l'extension de la surface d'étanchéité (27) de chaque traverse (26) est égale ou supérieure à la distance entre les surfaces d'étanchéité (27) de traverses voisines (26).

3. Filtre suivant la revendication 2, **caractérisé en ce que**, dans la direction de déplacement (24), l'extension de la surface d'étanchéité (27) de chaque traverse (26) est à peu près quatre à sept fois, en particulier cinq fois plus élevée que la distance entre les surfaces d'étanchéité (27) de traverses voisines (26).

4. Procédé de fonctionnement d'un filtre suivant l'une des revendications 1 à 3, **caractérisé en ce que** la source d'agent de nettoyage (23), en position de fermeture de l'ouverture de lavage (15) par la surface d'étanchéité (27) de l'une des traverses (26), produit dans le conduit de lavage (14) une montée en pression dans l'agent de nettoyage de telle sorte qu'une opération de lavage agissant par à-coups ou par impulsions se réalise lors de l'ouverture de l'ouverture de lavage (15).

5. Procédé suivant la revendication 4, **caractérisé en ce qu'**une durée de fermeture, pendant laquelle l'ouverture de lavage (15) est fermée par la surface d'étanchéité (27) de l'une des traverses (26), est égale ou supérieure à une durée de lavage, pendant laquelle a lieu le lavage de l'un des segments (25).

6. Procédé suivant l'une des revendications 4 et 5, **caractérisé en ce que** l'agent de nettoyage est un fluide gazeux, en particulier de l'air comprimé, la pression étant produite par compression du fluide gazeux lors du remplissage du réservoir d'agent de nettoyage (18).

7. Procédé suivant l'une des revendications 4 et 5, **caractérisé en ce que** l'agent de nettoyage est un fluide liquide, en particulier une quantité partielle du liquide épuré dans le filtre, la pression étant produite par déplacement élastique d'un moyen élastique, par exemple coussin de gaz, lors du remplissage du réservoir d'agent de nettoyage (18).

8. Procédé suivant l'une des revendications 4 à 7, **caractérisé en ce que**
- la durée de lavage est choisie égale ou supérieure à la durée d'ouverture,
- le débit volumique, qui s'échappe pendant une opération de lavage de l'ouverture de lavage (15) pour le nettoyage du segment respectif (25), est plus élevé par une sélection appropriée de la source d'agent de nettoyage (23) que le débit volumique, refoulé par la source d'agent de nettoyage (23) dans le réservoir d'agent de nettoyage (18).

9. Procédé suivant l'une des revendications 4 à 8, **caractérisé en ce que** le débit volumique d'agent de nettoyage, lors du lavage de l'un des segments (25), est à peu près trois à sept fois, en particulier cinq fois plus élevé que le débit volumique de remplissage de la source d'agent de nettoyage.
